# EUROPÄISCHE PATENTSCHRIFT

(11) **EP 0 915 889 B1**
(45) Veröffentlichungstag und Bekanntmachung des Hinweises auf die Patenterteilung: **07.11.2001**
(21) Anmeldenummer: 97931761.7
(22) Anmeldetag: 03.07.1997
(51) Int. Cl.: C07F 3/02, C08F 8/42

(54) **VERFAHREN ZUR SYNTHESE VON GRIGNARD-VERBINDUNGEN UNTER EINSATZ VON KATALYSATOREN**
METHOD OF SYNTHESIZING GRIGNARD COMPOUNDS USING CATALYSTS
PROCEDE POUR LA SYNTHESE DE COMPOSES ORGANOMAGNESIENS A L'AIDE DE CATALYSEURS

(30) Priorität: 12.07.1996 DE 19628159
(43) Veröffentlichungstag der Anmeldung: 19.05.1999
(73) Patentinhaber: Studiengesellschaft Kohle mbH, 45470 Mülheim (DE)
(72) Erfinder: BOGDANOVIC, Borislav, D-45470 Mülheim an der Ruhr (DE); SCHWICKARDI, Manfred, D-45470 Mülheim an der Ruhr (DE)
(74) Vertreter: von Kreisler, Alek, Dipl.-Chem.
(86) Internationale Anmeldenummer: EP9703516
(87) Internationale Veröffentlichungsnummer: WO9802443

(56) Entgegenhaltungen:
- EP-A- 0 469 463
- ALEANDRI L E ET AL: "INORGANIC GRIGNARD REAGENTS. PREPARATION AND THEIR APPLICATION FOR THE SYNTHESIS OF HIGHLY ACTIVE METALS, INTERMETALLICS, AND ALLOYS" CHEMISTRY OF MATERIALS, Bd. 7, Nr. 6, 1.Juni 1995, Seiten 1153-1170, XP000513075
- B. BOGDANOVIC: "Magnesium Anthracene Systems and their Application in Synthesis and Catalysis" ACCOUNTS OF CHEMICAL RESEARCH., Bd. 21, Nr. 7, - 1988 WASHINGTON US, Seiten 261-267, XP002041372
- BOGDANOVIC B ET AL: "Use of magnesium anthracene.cntdot. 3 THF in synthesis: generation of Grignard compounds and other reactions with organic halides" CHEM. BER. (CHBEAM,00092940);90; VOL.123 (7); PP.1507-15, MAX-PLANCK-INST. KOHLENFORSCH.;MUELHEIM AN DER RUHR; D-4300; FED. REP. GER. (DE), XP002041373 in der Anmeldung erwähnt
- BOGDANOVIC B ET AL: "Magnesium anthracene systems. 8. Magnesium adducts of substituted anthracenes - preparation and properties" CHEM. BER. (CHBEAM,00092940);90; VOL.123 (7); PP.1529-35, MAX-PLANCK-INST. KOHLENFORSCH.;MUELHEIM AN DER RUHR; D-4330/1; FED. REP. GER. (DE), XP002041374 in der Anmeldung erwähnt
- BARTMANN E ET AL: "Magnesium anthracene systems. 7. Active magnesium from catalytically prepared magnesium hydride or from magnesium anthracene and its uses in the synthesis" CHEM. BER. (CHBEAM,00092940);90; VOL.123 (7); PP.1517-28, MAX-PLANCK-INST. KOHLENFORSCH.;MUELHEIM AN DER RUHR; D-4330; FED. REP. GER. (DE), XP002041375 in der Anmeldung erwähnt
- S. ITSUNO: "The First Direct Formation of a Grignard Reagent on an Insoluble Polymer" JOURNAL OF ORGANIC CHEMISTRY., Bd. 52, Nr. 20, - 1987 EASTON US, Seiten 4644-4645, XP002041376 in der Anmeldung erwähnt

## Beschreibung

Die vorliegende Erfindung betrifft ein Verfahren zur Herstellung von Grignard-Verbindungen aus organischen Halogeniden und metallischem Magnesium in Gegenwart von Katalysatoren.

Grignard-Verbindungen werden üblicherweise durch Umsetzung von organischen Halogeniden mit Magnesium in einem etherischen Lösungsmittel dargestellt; in gewissen Fällen ist ihre Darstellung auch in Kohlenwasserstoffen möglich (Comprehensive Organometallic Chemistry II, Vol. 1, 1995, p. 58-63; Comprehensive Organometallic Chemistry I, Vol. 1, 1982, p. 155; *Chem. Ber.* **1990,** *123*, 1507 und 1517.)

Es existiert jedoch eine Vielzahl von organischen Halogen-Verbindungen - dazu gehören insbesondere aromatische bzw. vinylische Chlorverbindungen - mit denen die Grignard-Reaktion nur zögernd, mit geringen Ausbeuten bzw. kaum gelingt. Zur Erhöhung der Reaktivität von Magnesium gegenüber solchen Halogeniden sind zahlreiche Methoden bekannt, die auf physikalischer (Zermahlen, Anwendung von Ultraschall, Metallverdampfung) oder chemischer Aktivierung des Magnesiums (Mitführungsmethode, Rieke-Methode, Dehydrierung von Magnesiumhydrid, reversible Bildung von Magnesiumanthracen) beruhen (Active Metals - Preparation, Characterization, Applications, Herausg. A. Fürstner, VCH, 1996). Als *Katalysatoren* für die Grignard-Reaktion sind bekannt Anthracen bzw. Magnesiumanthracen und ihre Derivate; sie sind allerdings nur im Falle der Allyl-, Propargyl- und Benzylhalogenide anwendbar (*Chem*. *Ber*. **1990,** *123,* 1507). Die Nachteile der genannten Methoden sind, daß sie entweder relativ aufwendig und kostspielig oder nur beschränkt anwendbar bzw. wirksam sind, oder zu erhöhtem Verbrauch von Magnesium (die Mitführungsmethode: *J*. *Org. Chem.* **1959,** *24*, 504) führen. Es besteht daher nach wie vor der Bedarf nach wirksamen und wirtschaftlichen Methoden zur Herstellung von Grignard-Verbindungen ausgehend von obengenannten reaktionsträgen organischen Halogenverbindungen, die nicht mit den erwähnten Nachteilen behaftet sind und unter Vorgabe, daß herkömmliche, kommerzielle Magnesiumsorten verwendet werden können.

Es wurde nun überraschenderweise gefunden, daß auf Basis der sog. anorganischen Grignard-Reagenzien der Übergangsmetalle (US Patent 5.385.716, Studiengesellschaft Kohle, 1995;) ggf. in Kombination mit erfindungsgemäßen Kokatalysatoren, hochwirksame Katalysatoren für die Umwandlung von aromatischen Chlorverbindungen und anderen wenig reaktiven organischen Chlorverbindungen in die entsprechenden Grignard-Verbindungen unter Einsatz von kommerziellen Mg-Pulvern oder -Spänen erzeugt werden können. Als katalytisch aktiv gelten u. a. derartige Systeme auf Basis der Metalle der Gruppen 4 - 10 des Periodensystems, insbesondere von Fe, Mn, Cr und Mo; besonders wirksam darunter sind Fe- und Mn-Katalysatoren. Die Katalysatoren werden bevorzugt in situ, durch Umsetzung der betreffenden Metallhalogenide mit einem Überschuß an Mg-Metall in Tetrahydrofuran (THF), Monoglyme oder Diglyme, entsprechend der Darstellungsmethode für anorganische Grignard-Reagenzien (s. oben) erzeugt. Als Kokatalysatoren gelten insbesondere 9,10-Diphenylanthracen (DA) und / oder dessen Magnesiumaddukte (*Chem. Ber.* **1990**, *123*, 1529) und Magnesiumhalogenide. Als besonders katalytisch aktiv erweist sich das System aus DA, FeCl₂ oder Mn Cl₂, MgCl₂ und überschüssigem Mg-Pulver in THF. Monoglyme oder Diglyme. Die Umsetzungen mit organischen Chlorverbindungen werden bevorzugt bei Raumtemperatur bis zur Siedetemperatur des Lösungsmittels durchgeführt.

Die Erfindung betrifft daher ein Verfahren zur Herstellung von Grignard-Verbindungen, dadurch gekennzeichnet, dass organische Halogenide mit Magnesiummetall in einem etherischen Lösungsmittel in Gegenwart von anorganischen Grignard-Reagenzien als Katalysatoren umgesetzt werden, wobei die anorganischen Grignard-Reagenzien durch Umsetzung von Halogeniden der Übergangsmetalle der Gruppen 4 - 10 des Periodensystems mit Magnesiummetall erzeugt werden.

Die Erfindung wird anhand der folgenden Beispiele näher erläutert, ohne dadurch eingeschränkt zu werden.

Die nachfolgend beschriebenen Versuche wurden in Argonatmosphäre durchgeführt. Es wurden luft- und wasserfreie Lösungsmittel verwendet. THF wird zweckmäßigerweise über Magnesiumanthracen·3 THF getrocknet. In allen Versuchen wurde kommerzielles Mg-Pulver (270 mesh) verwendet. Wasserfreies MgCl₂ wurde für diesen Zweck aus 1,2-Dichlorethan und Magnesiumpulver in THF hergestellt.

### Beispiel 1

3.70 g (150 mmol) Mg-Pulver wurden im Vakuum (0.1 mbar) ausgeheizt (100-150 °C) und nach dem Abkühlen mit 50 ml THF und 2-3 Tropfen Ethylbromid versetzt und der Ansatz 1h bei Raumtemperatur (RT) gerührt. Anschließend wurden 0.26 g (2 mmol) wasserfreies FeCl₂, 20 ml THF und 10.2 ml einer 0.49 molaren MgCl₂-Lösung in THF (5 mmol) hinzugesetzt. Nach 30 min Rühren nahm die Lösung eine braune Farbe an (Bildung des anorganischen Grignard-Reagenzes von [FeMgCl·0.5 MgCl₂]). In die Suspension wurden darauf innerhalb von 30 min 13.6 ml (100 mmol) 1-Chlornaphthalin (getrocknet über Molsieb) unter Rühren getropft, wobei sich die Reaktionsmischung bis auf 62 °C erwärmte. Nach weiterem 2-stündigen Rühren des Ansatzes betrug die Ausbeute an 1-Naphthylmagnesiumchlorid, entsprechend der acidimetrischen Titration einer 2.0 ml Probe der filtrierten Lösung (Gesamtvolumen 95 ml), 62%, nach 19h 66 % und nach 45h 67%. Eine 10 ml Probe der Lösung wurde mit Ethanol protolysiert und die flüchtigen Bestandteile im Hochvakuum (Badtemperatur bis 200 °C) überdestilliert. Nach Zugabe einer bekannten Menge *n*-Hexadekan als Standard wurde das Destillat gaschromatographisch analysiert. Gefunden wurden 0.88 g Naphthalin (65 % bezogen auf 1-Chlornaphthalin) neben Binaphthyl; 1-Chlornaphthalin konnte nicht nachgewiesen werden.

In einem entsprechenden Vergleichsversuch ohne Zugabe von FeCl₂ fand nach 2h keine Reaktion von 1-Chlomaphthalin mit Mg-Pulver statt.

### Beispiele 2-4

Die Versuche wurden analog Beispiel 1 durchgeführt, wobei MnCl₂, CrCl₃ und MoCl₅ (MClₙ, Tabelle 1) anstelle von FeCl₂ als Katalysatorkomponenten eingesetzt wurden.

**Tabelle 1**

| MClₙ | Rkts.-temp. [°C] | Ausbeute von 1-C₁₀H₇MgCl^{[a]} % (Rkts.-zeit in h) | |
|---|---|---|---|
| MnCl₂ | 23-62 | 62(2) | 66.5(19) |
| CrCl₃ | 23-33 | 16(2) | 28.5(21) |
| MoCl₅ | 25 | 6(2) | 20 (22) |

| | | | |
|---|---|---|---|
| [a] Nach acidimetrischer Titration. | | | |

### Beispiel 5

3.70 g (150 mmol) Mg-Pulver wurden im Vakuum (0.1 mbar) ausgeheizt (100-150 °C) und nach dem Abkühlen mit 0.66 g (2 mmol) 9,10-Diphenylanthracen (DA, Aldrich), 50 ml THF und 2-3 Tropfen Ethylbromid versetzt. Nach 1-stündigem Rühren des Ansatzes entstand eine tiefblaue Lösung (Bildung des Mg-DA-Radikalanions, s. Beschreibung). In diese wurden 0.26 g (2 mmol) wasserfreies FeCl₂, 20 ml THF und 10.2 ml einer 0.49 molaren MgCl₂-Lösung in THF (5 mmol) hinzugesetzt und weitere 30 min gerührt. Innerhalb von 30 min wurden darauf tropfenweise 13.6 ml (100 mmol) 1-Chlornaphthalin zugegeben, wobei sich die Farbe der Lösung von tiefblau nach braun änderte und die Lösung sich bis auf 55 °C erwärmte. Nach 2h Rühren betrug die Ausbeute der Grignard-Verbindung des 1-Chlornaphthalins 63% und nach 5h 67% (nach acidimetrischer Titration). Bei der Protolyse einer 10 ml Probe der Lösung (Gesamtvolumen 95 ml; vgl. Beispiel 1) entstanden 0.92 g Naphthalin, entsprechend einer Ausbeute von 1-C₁₀H₇MgCl von 68%, Binaphthyl und keine weiteren Produkte (GC-Analyse).

### Beispiel 6

Der Versuch wurde analog Beispiel 5 durchgeführt, wobei Monoglyme anstelle von THF als Lösungsmittel verwendet wurde. Die maximale Reaktionstemperatur betrug 64 °C. 1h nach beendetem Zutropfen des 1-Chlornaphthalins bildete sich ein voluminöser Niederschlag. Das Lösungsmittel wurde im Vakuum abgedampft, der Rückstand in 100 ml THF gelöst und die Suspension filtriert. Nach acidimetrischer Titration betrug die Ausbeute an 1-Naphthylmagnesiumchlorid 80%.

### Beispiel 7

Der Versuch wurde analog Beispiel 5 durchgeführt, wobei Diglyme anstelle von THF als Lösungsmittel verwendet wurde. Die maximale Reaktionstemperatur betrug 70 °C. Die Aufarbeitung erfolgte wie für Beispiel 6 beschrieben. Nach 1h Reaktionszeit wurde acidimetrisch die Ausbeute an 1-Naphthylmagnesiumchlorid zu 81% ermittelt.

### Beispiele 8-12

Die Versuche (s. Tabelle 2) wurden analog Beispiel 5 durchgeführt.

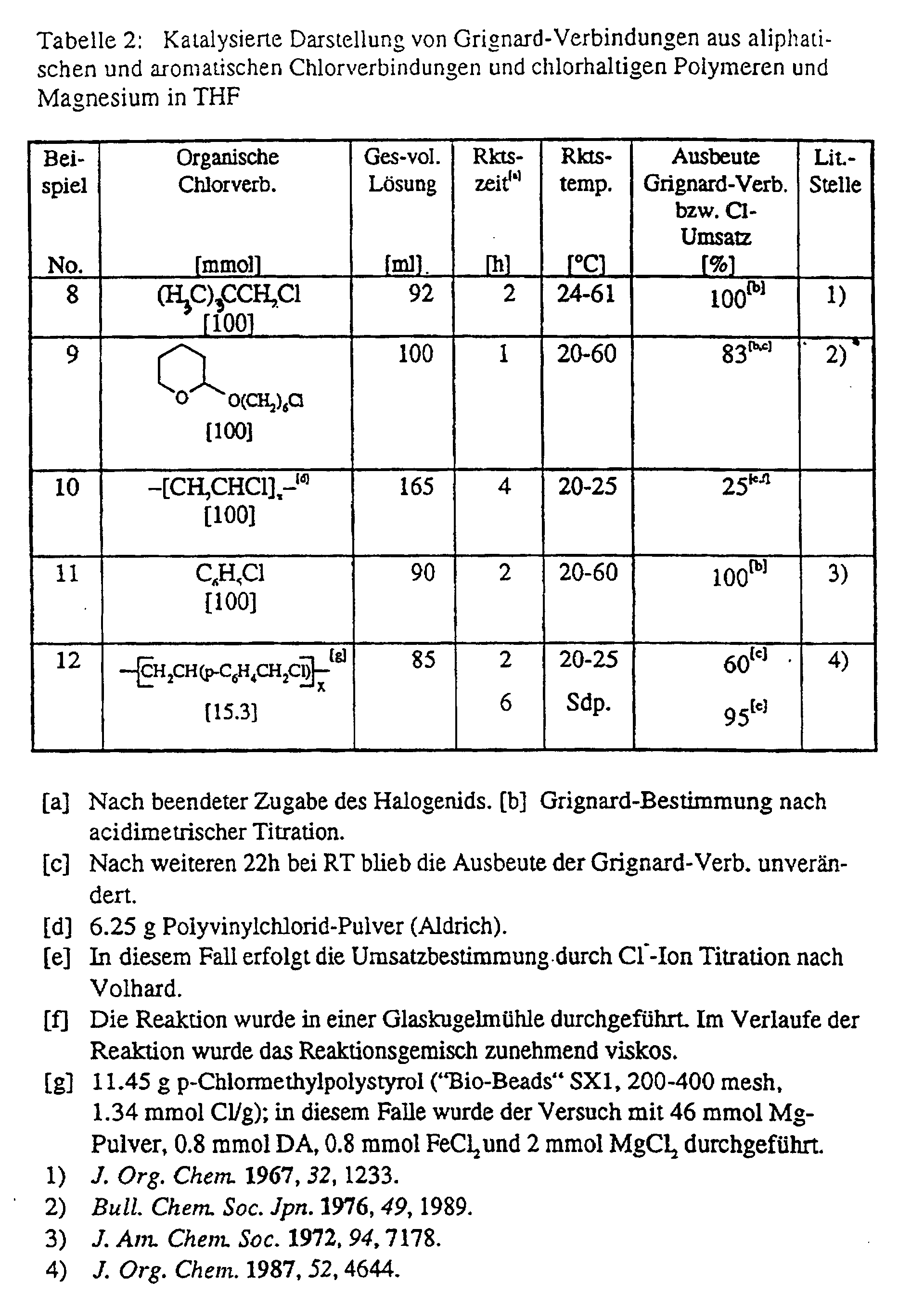

## Patentansprüche

1. Verfahren zur Herstellung von Grignard-Verbindungen, **dadurch gekennzeichnet, dass** organische Halogenide mit Magnesiummetall in einem etherischen Lösungsmittel in Gegenwart von anorganischen Grignard-Reagenzien als Katalysatoren umgesetzt werden, wobei die anorganischen Grignard-Reagenzien durch Umsetzung von Halogeniden der Übergangsmetalle der Gruppen 4 - 10 des Periodensystems mit Magnesiummetall erzeugt werden.

2. Verfahren nach Anspruch 1, wobei die anorganischen Grignard-Reagenzien unter Magnesiumüberschuss in situ erzeugt werden.

3. Verfahren nach Anspruch 1, wobei als anorganische Grignard-Reagenzien solche der Formel [M(MgCl)ₘ(MgCl₂)ₙ] eingesetzt werden, wobei M ein Übergangsmetall der Gruppen 4 - 10 des Periodensystems ist, m = 1, 2 oder 3, und n = 0 oder 1.

4. Verfahren nach Ansprüchen 1-3, wobei Anthracene oder substituierte Anthracene oder ihre Mg-Addukte und/oder Magnesiumhalogenide als Kokatalysatoren, eingesetzt werden.

5. Verfahren nach Ansprüchen 1-4, wobei als organische Halogenide aromatische Chlorverbindungen oder chlorhaltige Polymere verwendet werden.

6. Verfahren nach Ansprüchen 1-5, wobei als Lösungsmittel Tetrahydrofuran, Monoglyme oder Diglyme verwendet werden.

7. Verfahren nach Ansprüchen 1-6, **dadurch gekennzeichnet, dass** die Reaktion bei Temperaturen von 0 °C bis zur Siedetemperatur des betreffenden Lösungsmittels durchgeführt wird.

8. Verfahren nach Ansprüchen 1-7, wobei Magnesiummetall in Form von feinteiligem Magnesiumpulver, bevorzugt mit einer Teilchengröße zwischen 75 und 56 µm (200-270 mesh), verwendet wird.

9. Verfahren nach Ansprüchen 1-8, wobei als Halogenide der Übergangsmetalle Fe- oder MnHalogenide, bevorzugt FeCl₂ bzw. MnCl₂ verwendet werden.

10. Verfahren nach Ansprüchen 1 - 8, wobei als Halogenide der Übergangsmetalle CrCl₃ oder MoCl₅ verwendet wird.

11. Verfahren nach Anspruch 4, wobei 9,10-Diphenylanthracen als Kokatalysator verwendet wird.

12. Verfahren nach Ansprüchen 1-8, wobei organische Chlorverbindungen mit Magnesiumpulver in Gegenwart von FeCl₂ oder MnCl₂, 9,10-Diphenylanthracen, MgCl₂ und überschüssigem Mg-Pulver in THF, Mono- oder Diglyme umgesetzt werden.

## Claims

1. A process for the preparation of Grignard compounds, **characterized in that** organic halides are reacted with magnesium metal in an ether solvent in the presence of inorganic Grignard reagents as catalysts, wherein said inorganic Grignard reagents are prepared by reacting halides of transition metals of groups 4 to 10 of the Periodic Table with magnesium metal.

2. The process according to claim 1, wherein said inorganic Grignard reagents are prepared in situ with an excess of magnesium.

3. The process according to claim 1, wherein, as said inorganic Grignard reagents, those of formula [M(MgCl)ₘ(MgCl₂)ₙ]₂ are employed, wherein M is a transition metal of groups 4 to 10 of the Periodic Table, m = 1, 2 or 3, and n = 0 or 1.

4. The process according to claims 1 to 3, wherein anthracene or substituted anthracenes or their Mg adducts and/or magnesium halides are employed as cocatalysts.

5. The process according to claims 1 to 4, wherein aromatic chlorine compounds or chlorine containing polymers are employed as said organic halides.

6. The process according to claims 1 to 5, wherein tetrahydrofuran, monoglyme or diglyme is used as said solvent.

7. The process according to claims 1 to 6, **characterized in that** the reaction is performed at temperatures from 0 °C to the boiling point of the solvent employed.

8. The process according to claims 1 to 7, wherein magnesium metal in the form of finely divided magnesium powder, preferably having a particle size of between 75 and 56 µm (200-270 mesh), is used.

9. The process according to claims 1 to 8, wherein Fe or Mn halides, preferably FeCl₂ or MnCl₂, are used as said halides of transition metals.

10. The process according to claims 1 to 8, wherein CrCl₃ or MoCl₅ is used as said halides of transition metals.

11. The process according to claim 4, wherein 9,10-diphenylanthracene is used as said cocatalyst.

12. The process according to claims 1 to 8, wherein organic chlorine compounds are reacted with magnesium powder in the presence of FeCl₂ or MnCl₂, 9,10-diphenylanthracene, MgCl₂ and excess Mg powder in THF, monoglyme or diglyme.

## Revendications

1. Procédé de préparation de composés de Grignard, **caractérisé en ce qu'**on fait réagir des halogénures organiques avec du magnésium métallique dans un solvant de type éther en présence de réactifs de Grignard inorganiques servant de catalyseurs, où les réactifs de Grignard inorganiques sont obtenus par réaction d'halogénures des métaux de transition des Groupes 4 à 10 du Tableau Périodique avec du magnésium métallique.

2. Procédé selon la revendication 1, dans lequel les réactifs de Grignard inorganiques sont obtenus in situ en présence d'un excès de magnésium.

3. Procédé selon la revendication 1, dans lequel on utilise en tant que réactifs de Grignard inorganiques ceux qui ont la formule [M(MgCl)ₘ(MgCl₂)ₙ], où M est un métal de transition des groupes 4 à 10 du Tableau Périodique, m, vaut 1, 2 ou 3, et n vaut 0 ou 1.

4. Procédé selon les revendications 1 à 3, dans lequel on utilise en tant que co-catalyseurs des anthracènes ou des anthracènes substitués ou leurs produits d'addition avec le magnésium et/ou des halogénures des magnésium.

5. Procédé selon les revendications 1 à 4, dans lequel on utilise en tant qu'halogénures organiques des composés chlorés aromatiques ou des polymères chlorés.

6. Procédé selon les revendications 1 à 5, dans lequel on utilise en tant que solvant du tétrahydrofuranne, du monoglyme ou du diglyme.

7. Procédé selon les revendications 1 à 6, **caractérisé en ce que** la réaction est mise en oeuvre à des températures comprises entre 0°C et la température d'ébullition du solvant considéré.

8. Procédé selon les revendications 1 à 7, dans lequel le magnésium métallique est utilisé sous forme d'une poudre de magnésium finement divisée, ayant de préférence une granulométrie comprise entre 75 et 56 µm (entre 200 et 270 mesh).

9. Procédé selon les revendications 1 à 8, dans lequel on utilise en tant qu'halogénures des métaux de transition des halogénures de Fe ou de Mn, de préférence FeCl₂ ou MnCl₂.

10. Procédé selon les revendications 1 à 8, dans lequel on utilise en tant qu'halogénures des métaux de transition du CrCl₃ ou du MoCl₅.

11. Procédé selon la revendication 4, dans lequel le co-catalyseur utilisé est le 9,10-diphénylanthracène.

12. Procédé selon les revendications 1 à 8, dans lequel on fait réagir des composés chlorés organiques avec de la poudre de magnésium en présence de FeCl₂ ou de MnCl₂, du 9,10-diphénylanthracène, du MgCl₂ et du Mg en poudre en excès dans du THF, du mono- ou du diglyme.
